# EUROPEAN PATENT SPECIFICATION

(11) **EP 3 460 995 B1**
(45) Date of publication and mention of the grant of the patent: **11.05.2022**
(21) Application number: 18182510.0
(22) Date of filing: 09.07.2018
(51) Int. Cl.: H02P 29/00, H02H 3/00, H02P 3/00

(54) **POWER CONVERSION DEVICE AND SAFETY FUNCTION MODULE**
STROMWANDLUNGSVORRICHTUNG UND SICHERHEITSFUNKTIONSMODUL
DISPOSITIF DE CONVERSION DE PUISSANCE ET MODULE DE FONCTION DE SÉCURITÉ

(30) Priority: 19.09.2017 JP 2017179251
(43) Date of publication of application: 27.03.2019
(73) Proprietor: HITACHI INDUSTRIAL EQUIPMENT SYSTEMS CO., LTD., Chiyoda-ku Tokyo 101-0022 (JP)
(72) Inventor: TANAKA, Makoto, Tokyo, 101-0022 (JP)
(74) Representative: MERH-IP Matias Erny Reichl Hoffmann Patentanwälte PartG mbB

(56) References cited:
- EP-A1- 2 911 968
- EP-A1- 3 220 539
- US-A1- 2016 118 212
- US-B2- 9 602 028

## Description

### BACKGROUND

The present invention relates to a power conversion device.

It has been proposed a power conversion system that is formed by integrating a power conversion device for controlling the motor speed and a safety module for performing a safety function such as emergency stop. (For example, Japanese Unexamined Patent Application Publication No. 2011-229359, Japanese Unexamined Patent Application Publication No. 2011-008642)

### SUMMARY OF THE INVENTION

The present invention is defined in independent claim 1.

In the configuration described in Japanese Unexamined Patent Application Publication No. 2011-229359, it is necessary to provide parts to block a motor drive signal in response to a signal from a safety module in order to perform a safety function (see HWBB 32 in Fig. 4 of Japanese Unexamined Patent Application Publication No. 2011-229359).

In the configuration described in Japanese Unexamined Patent Application Publication No. 2011-008642, a gate circuit that performs blocking in response to an instruction from a safety function substrate is included in a control substrate (see a gate circuit 12 in Fig. 1 of Japanese Unexamined Patent Application Publication No. 2011-008642). In the configuration described in International Patent Application Publication No. 2014-067818, a safety circuit is included in an electronic bridge system to output one of an enable signal and a disable signal as a function of the system information, wherein the enable signal activates the bridge circuit. In the configuration described in United States Patent No. 9,602,028, a safety function, in particular a safe-torque-off function is included in an apparatus and a method actuating a frequency converter of an electric machine. In the configuration described in United States Unexamined Patent Application Publication No. 2016-0118212, a fail-safe safety switching device comprising first and second input channels for receiving first and second input signals, and a first testing arrangement for testing the first and second input channels is proposed.

On the other hand, as for the part that guarantees safety of the device, in general, it is desirable to perform a quality test after establishing standards more stringent than those for other normal parts. In this case, when the power converting device and the safety module are formed as an integrated system, it is difficult to efficiently perform the test only on the part of the safety module.

For example, in order to obtain certification for the functional safety standard IEC 61508, it is necessary to receive certification in a state in which all safety function parts that perform the safety function are combined. When there is a change in the device including the safety function parts, it is necessary to perform the certification test again on the changed device, unless it can prove to the certification body that the change does not impair the safety function.

Another problem is that the parts cost and the development cost are high in order to achieve the safety function, and as a result, the product price increases.

Thus, an object of the present invention is to provide a configuration capable of effectively testing only the part of the safety module.

To solve the above problem and to achieve the object of the present invention, a safety function unit according to independent device claim 1 is proposed. Preferred embodiments are defined in dependent claims.

According to an aspect of the present invention, there is provided a power conversion device including: a control unit that outputs a drive signal to drive equipment to be driven; a drive unit that drives the equipment to be driven based on the drive signal; a terminal unit that receives a signal from an upper control device and transmits the signal to the control unit; and a safety function unit that interferes with the drive signal that is transmitted from the control unit to the drive unit. The safety function unit includes: an input terminal that inputs the drive signal from the control unit; an output terminal that outputs the drive signal to the drive unit; a drive signal path that connects the input terminal with the output terminal; a control terminal that receives an interruption signal from the upper control device to instruct to stop the equipment to be driven; and/or an interruption circuit that interferes with the drive signal in the drive signal path based on the interruption signal.

According to another aspect of the present invention, there is provided a safety function module provided in a power conversion device to stop driving equipment to be driven which is supplied with power from a drive unit of the power conversion device, based on an interruption signal. This module includes: an input terminal that inputs a drive signal to drive the equipment to be driven; an output terminal that outputs the drive signal to the drive unit; a drive signal path that connects the input terminal with the output terminal; a control terminal that inputs an interruption signal to instruct to stop the equipment to be driven; and/or an interruption circuit that interferes with the drive signal in the drive signal path based on the interruption signal.

According to still another aspect of the present invention, there is provided a power conversion device including: a control unit that outputs a drive signal to drive equipment to be driven; a drive unit that drives the equipment to be driven based on the drive signal; and/or a terminal unit that receives a signal from an upper control device and transmits the signal to the control unit. The control unit includes a drive signal output terminal that outputs the drive signal. The drive unit includes a drive signal input terminal that inputs the drive signal, and an insulation circuit that inputs a drive signal from the drive signal input terminal. The drive unit allows selection of whether to the drive signal output terminal and the drive signal input terminal are directly connected by a jumper line or are connected through a safety function circuit.

In a more specific configuration, the safety function unit, the safety function module, or the safety function circuit has a circuit configuration separated from other circuits that configure the power conversion device. Further, more specifically, the safety function unit, the safety function module, or the safety function circuit is configured so as not to have a circuit other than the circuit involved in the safety function, to make the test of the circuit involved in the safety function being more efficient. Further, in another specific configuration, the safety function unit, the safety function module, or the safety function circuit is configured as a single substrate or as a single module, and to transmit and receive signals to and from the outside through terminals.

According to an aspect of the present invention, it is possible to provide a configuration capable of efficiently testing only the part of the safety module. Other problems, configurations, and effects of the present invention will become clear from the following description of the embodiments.

### BRIEF DESCRIPTION OF THE DRAWINGS

Fig. 1 is a diagram showing a configuration example of a power conversion device;
Fig. 2 is a block diagram showing a first comparative example of a safety function circuit of the power conversion device;
Fig. 3 is a block diagram showing a second comparative example of the safety function circuit of the power conversion device;
Fig. 4 is a block diagram showing a configuration example (with a safety function unit) of the power conversion device according to an embodiment; and
Fig. 5 is a block diagram of a configuration example (without the safety function unit) of the power conversion device according to the embodiment.

### DETAILED DESCRIPTION OF THE PREFERRED EMBODIMENT

Hereinafter, an embodiment will be described with reference to the accompanying drawings.

In the configuration of the present invention described below, the same reference numerals are used in common for the same parts or parts having the same functions among different figures, and their overlapping description may be omitted or simplified.

When there are elements with the same or similar function, the elements may be described using the same reference numerals with different suffixes. However, if there is no need to distinguish a plurality of elements from one another, the suffixes may be omitted from their descriptions.

The expressions such as "first", "second", and "third" used in this specification or other applicable documents are intended to identify the components and do not necessarily limit the number, order, or content of components. Further, a number for identifying a component is used for each context and the number used in one context does not necessarily represent the same configuration in other contexts. In addition, the configuration identified by a certain number does not interfere with having the function of the component identified by another number.

The position, size, shape, range, and the like of each of the configurations shown in the figures or described herein may not represent the actual position, size, shape, range and the like, to facilitate the understanding of the present invention. Thus, the present invention is not necessarily limited to the position, size, shape, range, and the like disclosed in the drawings or figures.

In an example of an embodiment according to the present invention, the safety function unit is made completely independent of other parts.

### First Embodiment

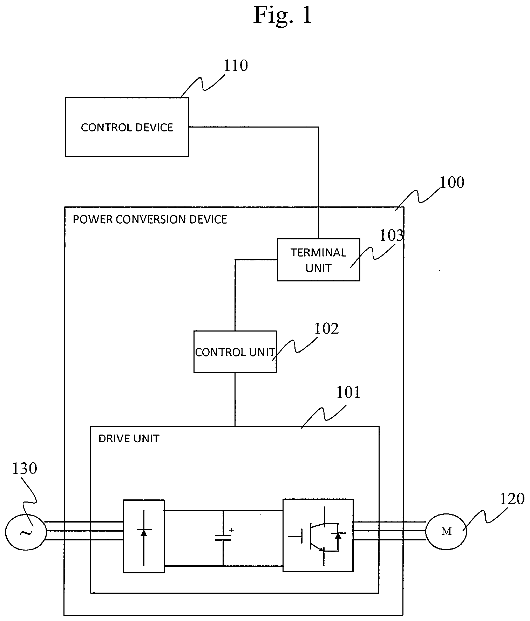

Fig. 1 is a diagram showing a configuration example of a typical power conversion device when the motor is driven as equipment to be driven. Fig. 1 shows a power conversion device (100), a power supply device (130), a motor (120), and a control device (110).

The power supply device (130) is a device for supplying electrical energy to various devices. The power supply device (130) is, for example, a three-phase AC transformer or the like.

The motor (120) is a device for converting electrical energy into mechanical energy. The motor (120) is, for example, is a three-phase AC motor or the like.

The control device (110) is a device for transmitting a signal to the power conversion device (100) to control the motion of the motor (120), and receiving the control state from the power conversion device (100). The control device (110) is, for example, a programmable logic controller (hereinafter, PLC) or the like.

The power conversion device (100) is provided with a drive unit (101) that transmits electrical energy received from the power supply device (130) to the motor (120), a control unit (102) that transmits a control signal to the drive unit to drive the motor, and a terminal unit (103) for transmitting signals between the control device (110) and the control unit (102).

The drive unit drives the motor by means of an AC converter unit that converts DC to AC based on the control signal. In general, the AC converter unit is configured with a switching device. For example, PWM (Pulse Width Modulation) signal is used as the control signal.

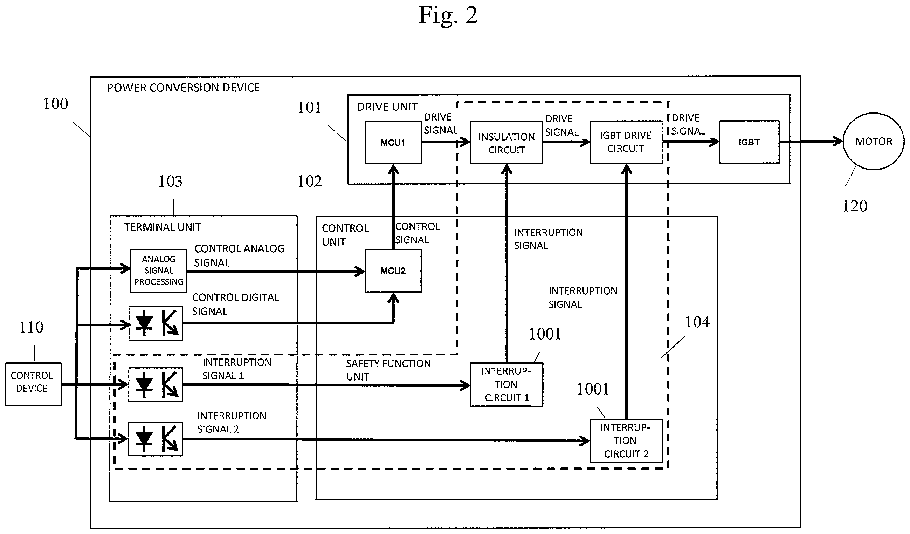

Fig. 2 is a configuration example of a safety function circuit of the power conversion device, which is shown as a first comparative example. An emergency stop in this configuration is achieved in such a way that when the terminal unit (103) receives an interruption signal from the control device (110), an interruption circuit (1001) of the control unit (102) generates an interruption signal, and the drive unit (101) blocks a drive signal. The drive unit (101) includes an IGBT (Insulated Gate Bipolar Transistor), an IGBT drive circuit that drives the IGBT, and an insulation circuit that receives the drive signal from a controller (MCU1) and transmits to the IGBT drive circuit. The interruption signal blocks the drive signal in the insulation circuit or the IGBT drive circuit.

In such a configuration, the safety function unit (104) surrounded by the dashed line is dispersed in the drive unit (101), the control unit (102), and the terminal unit (103), so that the safety function unit (104) and other parts of the drive unit (101), the control unit (102), and the terminal unit (103) interact with each other. For this reason, testing only the safety function unit (104) is not enough to yield a reliable test, and thus it is necessary to receive certification with all the combinations of the drive unit (101), the control unit (102), and the terminal unit (103). In general, the configuration of the drive unit (101) changes depending on the rated voltage and capacity of the motor (120) and the number of types increases. Thus in such a configuration, the number of possible combinations to receive certification will increase.

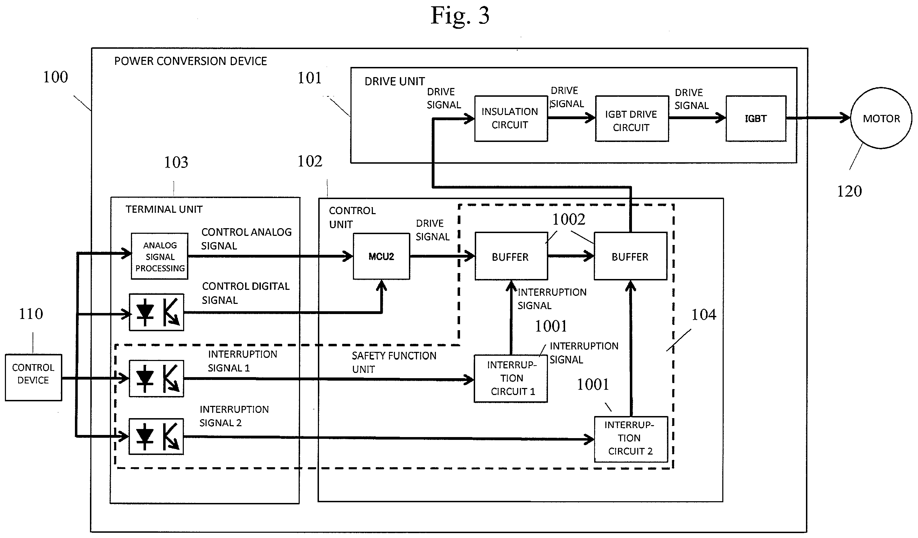

Fig. 3 is a configuration example of the safety function circuit of the power conversion device, which is shown as a second comparative example. The emergency stop of this configuration is achieved in such a way that the terminal unit (103) receives an interruption signal from the control device (110), and the interruption circuit (1001) of the control unit (102) blocks a drive signal to the drive unit (101). A buffer (1002) is provided within the control unit (102) to transmit drive signals sequentially to the drive unit (101). The interruption circuit (1001) transmits an interruption signal to the buffer (1002) to block the transmission of the drive signal to the next stage.

In such a configuration, the safety function unit (104) is provided in the control unit (102) and the terminal unit (103), so that it is possible to obtain certification with a combination of the control unit (102) and the terminal unit (103). In this way, it is possible to obtain certification regardless of the type of the drive unit (101). As a result, the number of combinations to obtain certification is smaller than that in the configuration of Fig. 2. However, the functions other than the safety function are also provided in the control unit (102) and the terminal unit (103), so that when there is a change in the part other than the safety function, it is necessary to take the certification test again unless it can prove that the change has no influence on the safety function.

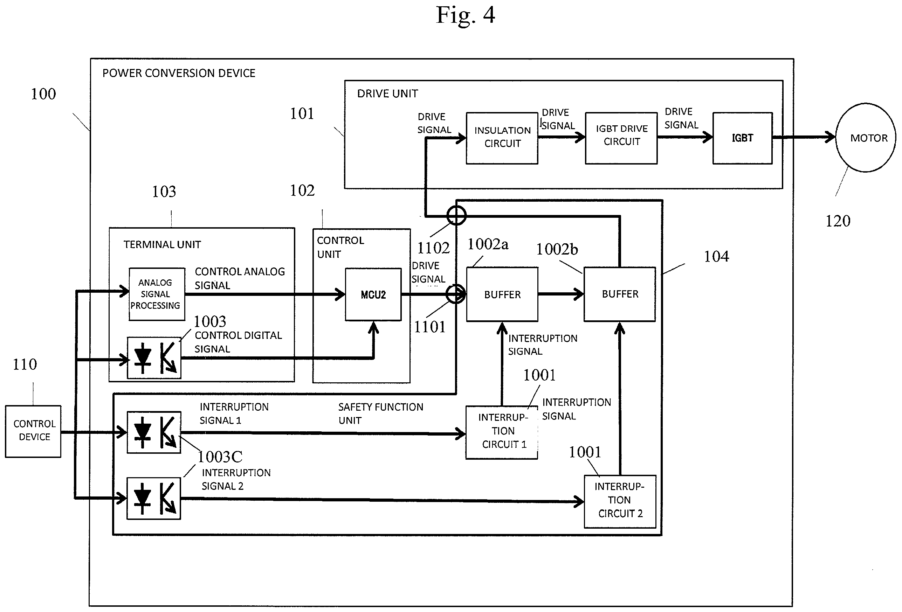

Fig. 4 shows a configuration example of the embodiment to solve the above problem. The emergency stop in this configuration is such that the interruption signal from the control unit (110) is received by the safety function unit (104) surrounded by the solid line, and the drive signal received from the control unit (102) is blocked within the safety function unit (104) so as to prevent the drive signal from being transmitted to the drive unit (101). In this configuration, the safety function is completely independent, so that it is possible to obtain certification by testing only the safety function unit (104). When the functions other than the safety function are not provided in the safety function unit, the change in the functions other than the safety function can be physically separated from each other. Thus, it is easy to prove that the change has no influence on the safety function. In this way, the need to take the certification test again can be eliminated for changes other than those related to the safety function.

A control analog signal or control digital signal is input to the terminal unit (103) from the control device (110) to control the motor (120). An optical coupler (1003) may be used as a terminal to isolate the power conversion device (100) from the outside. The control analog signal or control digital signal includes an instruction to control the rotation or stopping of the motor.

The control unit (102) is provided with a controller (MCU2) that is, for example, configured with a microcontroller. Analog signals for control or digital signals for control are input to the controller (MCU2) from the terminal unit (103). Based on these input signals, the controller (MCU2) generates and outputs drive signals to drive the drive unit (101). The drive signal is, more specifically, a signal that controls the IGBT which is the switching device. The drive signal is input to the safety function unit (104).

The safety function unit (104) receives the drive signal from the controller (MCU2) through the input terminal (1101). Then, the safety function unit (104) transfers the drive signal through two stage buffers (1002a, 1002b) and transmits it from the output terminal (1102) to the drive unit (101). Further, the safety function unit (104) also includes an optical coupler (1003C) which is a control terminal for receiving an optical signal to instruct blocking, as well as an interruption circuit (1001) for generating an interruption signal in response to an electrical signal from the optical coupler (1003C). Upon blocking, the interruption signal is transmitted from the interruption circuit (1001) to the buffer (1002) to stop at least one of the input and output of the signal to the buffer (1002), thereby the transmission of the drive signal to the drive unit (101) is stopped.

Each of the optical coupler (1003C), the buffer (1002), and the interruption circuit (1001) is double structured within the safety function unit (104) in order to make blocking secure even if either one of the two is unable to function. For this reason, the buffer may be configured in a single stage or in three stages or more.

The drive unit (101) includes an insulation circuit which receives the drive signal as an input signal, an IGBT drive circuit that receives the drive signal from the insulation circuit, and an IGBT driven by the IGBT drive circuit. The insulation circuit is a circuit to isolate the high current section, such as an IGBT, for driving the power device from the low current section, such as an external control device, for processing signals. In the configuration of Fig. 4, the drive unit can be regarded as the high current section and other parts can be regarded as the low current section. As the drive signal is generated in the low current section, it is necessary to isolate it when transmitting the signal to the final-stage IGBT. As for the isolation method, in general, the signal is isolated by a photocoupler (gate drive coupler). The IGBT drive circuit controls the IGBT by generating a drive signal to actually switch the IGBT based on the received drive signal. A specific configuration of the components of the drive unit (101) can follow the existing technology.

With the configuration described above, the drive signal input to the drive unit (101) will be blocked within the safety function unit (104). The drive signal, which is a signal that allows the GIBT to perform a switching operation, is transmitted from the controller (MCU2) to the drive unit (101) through the inside of the safety function unit (104). When the drive signal is blocked, the switching device of the IGBT is turned off and the drive power of the motor (120) is lost.

Various safety criteria can be considered in defining what state the safety state should be achieved by the safety function unit (104). In general, it is often defined by the state called STO (Safe Torque Off). Even if the drive power of the motor (120) is lost, the motor may rotate for a while by inertia. However, the STO is defined as the state in which the torque is not sufficient, so that the state of rotating by inertia meets the criteria of STO. Further, it is also possible to provide another physical brake to stop the motor rotating by inertial.

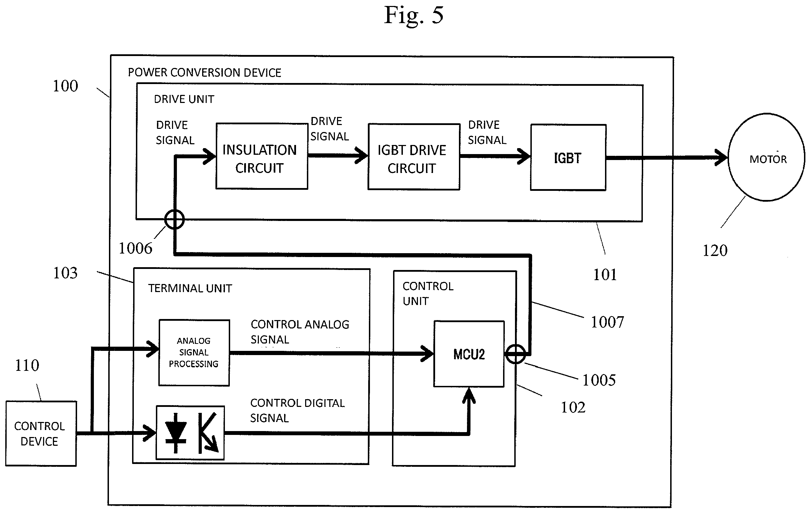

Fig. 5 shows a configuration of the power conversion device in which the safety function unit (104) is removed from the configuration of Fig. 4. In the configuration of Fig. 4, the safety function unit (104) is provided between the control unit (102) and the drive unit (101) to block the drive signal. When the safety function is removed, the drive signal can be transmitted by directly connecting the control unit (102) with the drive unit (101). With this configuration, it is possible to provide a less expensive product to customers who do not need the safety function.

In order to make the safety function unit (104) removable, the power conversion device (100) of the present embodiment includes an output terminal (1005) for outputting a drive signal that is transmitted from the control unit (102) to the drive unit (101), as well as an input terminal (1006) for receiving the drive signal on the drive unit (101) side. In the power conversion device (100) that does not require the safety function unit (104), the output terminal (1005) and the input terminal (1006) are connected by a jumper line (1007). In the power conversion device (100) that requires the safety function unit (104), the drive signal from the output terminal (1005) is connected to the input terminal (1101) to the first-stage buffer (1002a) of the safety function unit (104), and the output from the preceding-stage buffer (1002b) is connected from the output terminal (1102) to the input terminal (1006) of the drive unit (101).

According to the present embodiment, it is possible to obtain certification of the function safety standard, without being affected by the difference in the motor capacity and voltage as well as the difference in the control unit and the terminal unit. Further, because the certification of the function safety standard is obtained by testing only the safety function unit (104), it is enough that the examination of the influence of change is performed only on the safety function unit (104). Further, because the safety function unit (104) is made independent, it functions as a power conversion device even if the safety function unit is not present. In order to easily provide both devices by selecting presence or absence of the safety function unit as described above, it is convenient to configure the safety function unit (104) with an independent substrate or module. Such a substrate or module can easily be removed by using a terminal provided on the power conversion device 100 side.

## Claims

1. A safety function unit (104) that is provided in a power conversion device (100), wherein the power conversion device (100) comprises a control unit (102), and is provided to stop the drive of equipment comprising a motor (120) to be driven and which is supplied with power from a drive unit (101) of the power conversion device (100), based on an interruption signal, the safety function unit (104) comprising:
an input terminal (1101) that inputs a drive signal from the control unit (102) to drive the equipment to be driven;
an output terminal (1102) that outputs the drive signal to the drive unit (101);
a control terminal arranged at the safety function unit (104) that inputs an interruption signal to instruct to stop the equipment to be driven; and
an interruption circuit (1001) in the safety function unit (104) that interferes with a drive signal in a drive signal path based on the interruption signal,
**characterized by**
a buffer (1002) in the safety function unit (104) that accumulates the drive signal provided in the drive signal path, and
wherein the interruption circuit (1001) in the safety function unit (104) stops at least one of the input and output of the signal to the buffer (1002).

2. The safety function unit (104) according to claim 1,
wherein the safety function unit (104) is configured as a single substrate or a single module, and
wherein the safety function unit (104) transmits and receives signals to and from the outside by the input terminal (1101), the output terminal (1102), and the control terminal.

3. The safety function unit (104) according to claim 1, comprising a plurality of pairs of the control terminals and interruption circuits (1001).

4. A power conversion device (100) comprising the safety function unit (104) according to claim 1, further comprising:
the control unit (102) that outputs a drive signal to drive equipment to be driven;
the drive unit (101) that drives the equipment to be driven based on the drive signal;
a terminal unit (103) that receives a signal from an upper control device (110) and transmits the signal to the control unit (102); and
the safety function unit (104) interferes with the drive signal that is transmitted from the control unit (102) to the drive unit (101).

5. The power conversion device (100) according to claim 4,
wherein the safety function unit (104) is configured to isolate the circuit from the control unit (102), the drive unit (101), and the terminal unit (103), and
wherein the safety function unit (104) is connected to the control unit (102), the drive unit (101), and the terminal unit(103) by the input terminal (1101) and the output terminal (1102).

6. The power conversion device (100) according to claim 4,
wherein the safety function unit (104) is configured as a single substrate or a single module, and
wherein the safety function unit (104) transits and receives signals to and from the outside by the input terminal (1101), the output terminal (1102), and the control terminal.

7. The power conversion device (100) according to claim 4, comprising a plurality of pairs of the control terminals and interruption circuits (1001).

8. The power conversion device according to claim 4,
wherein the control unit (102) includes the drive signal output terminal (1005) that outputs the drive signal,
wherein the drive unit (101) includes the drive signal input terminal (1006) that inputs the drive signal, and an interruption circuit that inputs a drive signal from the drive signal input terminal (1006), and
wherein the drive unit (101) allows selection of whether the drive signal output terminal (1005) and the drive signal input terminal (1006) are directly connected by the jumper line (1007) or are connected through a safety function unit (104).

## Patentansprüche

1. Sicherheitsfunktionseinheit (104), die in einer Leistungsumsetzungsvorrichtung (100) vorgesehen ist, wobei die Leistungsumsetzungsvorrichtung (100) eine Steuereinheit (102) umfasst und vorgesehen ist, den Antrieb von Ausstattung, die einen anzutreibenden Motor (120) umfasst und die mit Leistung von einer Antriebseinheit (101) der Leistungsumsetzungsvorrichtung (100) versorgt wird, auf der Grundlage eines Unterbrechungssignals anzuhalten, wobei die Sicherheitsfunktionseinheit (104) Folgendes umfasst:
einen Eingabeanschluss (1101), der ein Antriebssignal von der Steuereinheit (102) eingibt, die anzutreibende Ausstattung anzutreiben;
einen Ausgabeanschluss (1102), der das Antriebssignal an die Antriebseinheit (101) ausgibt;
einen Steueranschluss, der an der Sicherheitsfunktionseinheit (104) eingerichtet ist, der ein Unterbrechungssignal eingibt, um anzuweisen, die anzutreibende Ausstattung anzuhalten, und
eine Unterbrechungsschaltung (1001) in der Sicherheitsfunktionseinheit (104), die ein Antriebssignal in einem Antriebssignalweg auf der Grundlage des Unterbrechungssignals stört,
**gekennzeichnet durch**
einen Puffer (1002) in der Sicherheitsfunktionseinheit (104), der das Antriebssignal, das in dem Antriebssignalweg bereitgestellt ist, akkumuliert,
wobei die Unterbrechungsschaltung (1001) in der Sicherheitsfunktionseinheit (104) die Eingabe und/oder die Ausgabe des Signals an den Puffer (1002) anhält.

2. Sicherheitsfunktionseinheit (104) nach Anspruch 1,
wobei die Sicherheitsfunktionseinheit (104) als ein einzelnes Substrat oder ein einzelnes Modul konfiguriert ist und
wobei die Sicherheitsfunktionseinheit (104) Signale nach und von außen durch den Eingabeanschluss (1101), den Ausgabeanschluss (1102) und den Steueranschluss überträgt und empfängt.

3. Sicherheitsfunktionseinheit (104) nach Anspruch 1, die mehrere Paare der Steueranschlüsse und Unterbrechungsschaltungen (1001) umfasst.

4. Leistungsumsetzungsvorrichtung (100), die die Sicherheitsfunktionseinheit (104) nach Anspruch 1 umfasst, die ferner Folgendes umfasst:
die Steuereinheit (102), die ein Ausgabesignal an die anzutreibende Antriebsausstattung ausgibt;
die Antriebseinheit (101), die die anzutreibende Ausstattung auf der Grundlage des Antriebssignals antreibt, und
eine Anschlusseinheit (103), die ein Signal von einer übergeordneten Steuervorrichtung (110) empfängt und das Signal an die Steuereinheit (102) überträgt,
wobei die Sicherheitsfunktionseinheit (104) das Antriebssignal stört, das von der Steuereinheit (102) an die Antriebseinheit (101) übertragen wird.

5. Leistungsumsetzungsvorrichtung (100) nach Anspruch 4,
wobei die Sicherheitsfunktionseinheit (104) konfiguriert ist, die Schaltung von der Steuereinheit (102), der Antriebseinheit (101) und der Anschlusseinheit (103) zu isolieren, und
wobei die Sicherheitsfunktionseinheit (104) durch den Eingabeanschluss (1101) und den Ausgabeanschluss (1102) mit der Steuereinheit (102), der Antriebseinheit (101) und der Anschlusseinheit (103) verbunden ist.

6. Leistungsumsetzungsvorrichtung (100) nach Anspruch 4,
wobei die Sicherheitsfunktionseinheit (104) als ein einzelnes Substrat oder ein einzelnes Modul konfiguriert ist und
wobei die Sicherheitsfunktionseinheit (104) Signale nach und von außen durch den Eingabeanschluss (1101), den Ausgabeanschluss (1102) und den Steueranschluss überträgt bzw. empfängt.

7. Leistungsumsetzungsvorrichtung (100) nach Anspruch 4, die mehrere Paare der Steueranschlüsse und Unterbrechungsschaltungen (1001) umfasst.

8. Leistungsumsetzungsvorrichtung nach Anspruch 4,
wobei die Steuereinheit (102) den Antriebssignalausgabeanschluss (1005) enthält, der das Antriebssignal ausgibt,
wobei die Antriebseinheit (101) den Antriebssignaleingabeanschluss (1006), der das Antriebssignal eingibt, und eine Unterbrechungsschaltung, die ein Antriebssignal von dem Antriebssignaleingabeanschluss (1006) eingibt, enthält und
wobei die Antriebseinheit (101) eine Auswahl erlaubt, ob der Antriebssignalausgabeanschluss (1005) und der Antriebssignaleingabeanschluss (1006) durch die Überbrückungsleitung (1007) direkt verbunden sind oder durch eine Sicherheitsfunktionseinheit (104) verbunden sind.

## Revendications

1. Agencement d'obturateur de calandre active (10) ayant un châssis modulaire assemblé (12, 12', 12") comprenant :
une pluralité de pièces de châssis primaire (14), formées par extrusion, chaque pièce parmi la pluralité de pièces de châssis primaire (14) ayant une première extrémité (16) et une seconde extrémité (18) ;
une portion de châssis supérieur (26) du châssis modulaire assemblé (12, 12', 12") formée à partir d'au moins une pièce parmi la pluralité de pièces de châssis primaire (14) ;
une portion de châssis inférieur (28) du châssis modulaire assemblé (12, 12', 12") formée à partir d'au moins une pièce parmi la pluralité de pièces de châssis primaire (14) ;
un boîtier de moteur (30) s'étendant entre la portion de châssis supérieur (26) et la portion de châssis inférieur (28) et ayant deux ou plusieurs ouvertures de palettes (32) formées sur le boîtier de moteur (30) ;
une pluralité de pièces de châssis secondaire (48) ayant chacune une portion de bec supérieur (50) et une portion de bec inférieur (51), dans lequel la pluralité de pièces de châssis secondaire (48) incluent un capuchon de première extrémité (56) connecté à la portion de châssis supérieur (26) au niveau de la portion de bec supérieur (50) et le capuchon de première extrémité (56) étant connecté à la portion de châssis inférieur (28) au niveau de la portion de bec inférieur (52), un capuchon de seconde extrémité (58) de la pluralité de pièces de châssis secondaire (48) connecté à la portion de châssis supérieur (26) au niveau de la portion de bec supérieur (50) et le capuchon de seconde extrémité (58) étant connecté à la portion de châssis inférieur (28) au niveau de la portion de bec inférieur (51), dans lequel, quand le capuchon de première extrémité (56) et le capuchon de seconde extrémité (58) sont connectés à la portion de châssis supérieur (26) et à la portion de châssis inférieur (28), une ou plusieurs ouvertures (13, 13') du châssis modulaire assemblé (12, 12', 12") sont définies par le boîtier de moteur (30), le capuchon de première extrémité (56), le capuchon de seconde extrémité (58), la portion de châssis supérieur (26) et la portion de châssis inférieur (28) ;
une pluralité de palettes (36, 37, 39) formées par extrusion, positionnées en rotation à l'intérieur desdites une ou plusieurs ouvertures (13, 13') pour commander la quantité d'air s'écoulant à travers lesdites une ou plusieurs ouvertures (13, 13'), dans lequel une première extrémité de chaque palette parmi la pluralité de palettes (36, 37, 39) est connectée en rotation à un capuchon parmi le capuchon de première extrémité (56) ou le capuchon de seconde extrémité (58) et une seconde extrémité de chaque palette parmi la pluralité de palettes (36, 37, 39) est connectée en rotation au boîtier de moteur (30) ; et
un mécanisme de transmission connecté entre la pluralité de palettes (36, 37, 39) pour amener la pluralité de palettes (36, 37, 39) à se mettre en rotation entre une position fermée et une position ouverte en réponse à un actionnement d'un moteur (42) contenu dans le boîtier de moteur (30), dans lequel au moins une palette parmi la pluralité de palettes (36, 37, 39) est une palette d'entraînement (37) qui est connectée au moteur (42) et qui reçoit une force de rotation de celui-ci, laquelle est ensuite transmise via ladite au moins une palette d'entraînement (37) à la totalité de la pluralité de palettes (36, 37, 39) via le mécanisme de transmission,
**caractérisé en ce que**
chaque pièce parmi la pluralité de pièces de châssis primaire (14) a un perçage creux (20) s'étendant à travers chaque pièce parmi la pluralité de pièces de châssis primaire (14) formant une ouverture au niveau de la première extrémité du perçage creux (20) et une ouverture au niveau de la seconde extrémité du perçage creux (20).

2. Assemblage de calandre active (10) selon la revendication 1, dans lequel chaque palette parmi la pluralité de palettes (36, 37, 39) est creuse et a une ouverture à chaque extrémité pour recevoir un capuchon d'extrémité de palette (72) au niveau de chacune des extrémités de la pluralité de palettes (36, 37, 39),
dans lequel chaque capuchon d'extrémité de palette (72) sur chaque palette parmi la pluralité de palettes (36, 37, 39) a un ou plusieurs plots (78) configurés pour coulisser jusque dans une ouverture respective sur un capuchon parmi le capuchon de première extrémité (56) de la pluralité de pièces de châssis secondaire (48), le second capuchon d'extrémité (58) de la pluralité de pièces de châssis secondaire (48), le boîtier de moteur (30) et le mécanisme de transmission pour connecter en rotation la pluralité de palettes (36, 37, 39) du châssis modulaire assemblé (12, 12', 12").

3. Assemblage de calandre active (10) selon la revendication 1, dans lequel chaque palette parmi la pluralité de palettes (36, 37, 39) a une ou plusieurs ouvertures à pivot au niveau de chaque extrémité de la pluralité de palettes (36, 37, 39) pour recevoir des plots formés sur la surface d'un capuchon parmi le capuchon de première extrémité (56) de la pluralité de pièces de châssis secondaire (48), le capuchon de seconde extrémité (58) de la pluralité de pièces de châssis secondaire (48), le boîtier de moteur (30) et le mécanisme de transmission pour connecter en rotation la pluralité de palettes (36, 37, 39) au châssis modulaire assemblé (12, 12', 12").

4. Assemblage de calandre active (10) selon la revendication 1, comprenant en outre une tige (44) connectée entre le moteur (42) et au moins une palette entraînée (37) pour faciliter une rotation de la pluralité de palettes (36, 37, 39) en combinaison avec le mécanisme de transmission.

5. Assemblage de calandre active (10) selon la revendication 1, dans lequel le bec supérieur du capuchon de première extrémité (56) de la pluralité de pièces de châssis secondaire (48) coulisse jusque dans l'ouverture au niveau de la première extrémité de la portion de châssis supérieur (26) et le bec inférieur du capuchon de première extrémité (56) de la pluralité de pièces de châssis secondaire (48) coulisse jusque dans l'ouverture au niveau de la première extrémité de la portion de châssis inférieur (28), tandis que le bec supérieur du capuchon de seconde extrémité (58) de la pluralité de pièces de châssis secondaire (48) coulisse jusque dans l'ouverture au niveau de la seconde extrémité de la portion de châssis supérieur (26) et que le bec inférieur du capuchon de seconde extrémité (58) de la pluralité de pièces de châssis secondaire (48) coulisse jusque dans l'ouverture au niveau de la seconde extrémité de la portion de châssis inférieur (28).

6. Assemblage de calandre active (10) selon la revendication 1, comprenant en outre :
au moins une pièce de châssis primaire alternative ayant une longueur différente de l'autre pluralité de pièces de châssis primaire (14) ;
au moins une palette alternative ayant une longueur différente de l'autre pluralité de palettes (36, 37, 39) ;
au moins un châssis secondaire alternatif ayant une portion verticale supérieure avec un bec supérieur, une portion verticale inférieure avec un bec inférieur et une portion horizontale assurant une connexion entre la portion verticale supérieure et la portion verticale inférieure, où la pièce de châssis secondaire alternative peut-être interchangée avec le capuchon de première extrémité (56) et le capuchon de seconde extrémité (58) ;
dans lequel, quand ladite au moins une pièce de châssis secondaire alternative (48) est utilisée à la place d'une pièce parmi la pluralité de pièces de châssis secondaire (48), au moins une pièce parmi la pluralité de pièces de châssis primaire (14) est remplacée par ladite au moins une pièce de châssis primaire alternative et au moins une palette parmi la pluralité de palettes (36, 37, 39) est remplacée par au moins une palette alternative.

7. Assemblage de calandre active (10) selon la revendication 1, comprenant en outre au moins une rainure de clavette formée dans chaque pièce parmi la pluralité de pièces de châssis, dans lequel ladite au moins une rainure de clavette s'étend entre la première extrémité et la seconde extrémité.

8. Assemblage de calandre active (10) selon la revendication 7, comprenant en outre un ou plusieurs joints d'étanchéité en caoutchouc extrudé ayant une portion avec une forme de section transversale capable de correspondre à et de coulisser dans ladite au moins une rainure de clavette de la pluralité de pièces de châssis primaire (14) pour fixer lesdits un ou plusieurs joints d'étanchéité en caoutchouc extrudé à la pluralité de pièces de châssis primaire (14).
